(19) Europäisches Patentamt
European Patent Office
Office européen des brevets

(11) **EP 3 163 952 A1**

(12) **EUROPÄISCHE PATENTANMELDUNG**

(43) Veröffentlichungstag:
**03.05.2017 Patentblatt 2017/18**

(51) Int Cl.:
***H04W 52/24*** *(2009.01)*

(21) Anmeldenummer: **15191411.6**

(22) Anmeldetag: **26.10.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Volkswagen Aktiengesellschaft 38440 Wolfsburg (DE)**

(72) Erfinder:
• **Mohaupt, Matthias 44789 Bochum (DE)**
• **Kampermann, Jens 42781 Haan (DE)**

(54) **VORRICHTUNG, VERFAHREN UND COMPUTERPROGRAMM FÜR EIN SENDE-EMPFANGSSYSTEM MIT EINEM ERSTEN KOMMUNIKATIONSMODUL UND MIT EINEM ZWEITEN KOMMUNIKATIONSMODUL**

(57) Ausführungsbeispiele beziehen sich auf eine Vorrichtung (10), ein Verfahren und ein Computerprogramm für ein Sende-Empfangssystem (100) mit einem ersten Kommunikationsmodul (110) zur Kommunikation in einem ersten Mobilfunksystem und mit einem zweiten Kommunikationsmodul (120) zur Kommunikation in einem zweiten Mobilfunksystem. Die Vorrichtung (10) umfasst ein Kontrollmodul (12) ausgebildet zur Anpassung einer Sendeleistung, die in dem ersten Mobilfunksystem verwendet wird basierend auf einer Aktivität des zweiten Kommunikationsmoduls (120) in dem zweiten Mobilfunksystem.

FIG. 1

EP 3 163 952 A1

**Beschreibung**

Ausführungsbeispiele beziehen sich auf eine Vorrichtung, ein Verfahren und ein Computerprogramm für ein Sende-Empfangssystem mit einem ersten Kommunikationsmodul zur Kommunikation in einem ersten Mobilfunksystem und mit einem zweiten Kommunikationsmodul zur Kommunikation in einem zweiten Mobilfunksystem, ausgebildet zur Anpassung einer Sendeleistung, die in dem ersten Mobilfunksystem verwendet wird basierend auf einer Aktivität des zweiten Kommunikationsmoduls in dem zweiten Mobilfunksystem.

Eine Vernetzung von Fahrzeugen nimmt in zunehmendem Maße eine zentrale Stellung im Fahrzeugbau ein. Sowohl eine Vernetzung der Fahrzeuge nach außen, z.B. in einem Fahrzeugzu-Fahrzeug-Kommunikationsnetzwerk oder als eine Vernetzung mit einer Werkstatt oder zum pilotierten Parken, als auch eine Vernetzung nach innen, beispielsweise um Fahrzeuginsassen einen Zugang zu Unterhaltungsfunktionen des Fahrzeugs anzubieten oder einen Internetzugang bereitzustellen, gehören zu häufig nachgefragten Funktionen bei neuen Fahrzeugen.

Fahrzeuge können dabei gleichzeitig über mehrere Mobilfunksysteme kommunizieren. Beispielsweise können Fahrzeuge für die Fahrzeuginsassen einen Zugangspunkt, etwa für ein Unterhaltungssystem über ein drahtloses lokales Zugangsnetzwerk (auch engl. Wireless Local Area Network, WLAN) aufspannen, oder per WLAN mit einem Parkhaus oder anderen Fahrzeugen kommunizieren, und gleichzeitig eine Verbindung zu einem zellulären Mobilfunksystem aufbauen, beispielsweise zu einem Universal Mobile Telecommunication System (UMTS) oder zu einem Long Term Evolution (LTE) Mobilfunksystem.

Intermodulationsprodukte sind Frequenzen, die entstehen, wenn Signale mit zwei oder mehr unterschiedlichen Frequenzen mit einer nichtlinearen Übertragungsfunktion verarbeitet werden. Es gibt dabei Intermodulationsprodukte unterschiedlicher Ordnungen. Ist $f_1$ die erste Quellfrequenz und $f_2$ die zweite Quellfrequenz, dann ergeben die Differenz $f_1 - f_2$ und die Summe $f_1 + f_2$ die Intermodulationsprodukte der 2. Ordnung, $2f_1 - f_2$, $f_1 - 2f_2$ und $2f_1 + f_2$ die Intermodulationsprodukte der 3. Ordnung, etc.

Es besteht daher der Bedarf, ein verbessertes Konzept zur Behandlung von Intermodulationsprodukten bei der Nutzung unterschiedlicher Mobilfunksysteme, beispielsweise in Fahrzeugen, bereitzustellen.

Diesem Bedarf wird durch die Vorrichtung, das Verfahren und das Computerprogramm gemäß den unabhängigen Ansprüchen entsprochen.

Ausführungsbeispiele schaffen eine Vorrichtung, ein Verfahren und ein Computerprogramm für ein Sende-Empfangssystem mit einem ersten Kommunikationsmodul zur Kommunikation in einem ersten Mobilfunksystem und mit einem zweiten Kommunikationsmodul zur Kommunikation in einem zweiten Mobilfunksystem. Die Vorrichtung ist ausgebildet, um eine Sendeleistung, die im ersten Mobilfunksystem verwendet wird, basierend auf einer Aktivität des zweiten Kommunikationsmoduls anzupassen. Nutzen das erste Kommunikationsmodul und das zweite Kommunikationsmodul beispielsweise Frequenzbänder, bei denen es durch Intermodulation zu Störungen im Empfang kommen kann, so kann die Vorrichtung eine Sendeleistung des ersten Kommunikationsmoduls reduzieren, um die Störungen zu reduzieren.

Ausführungsbeispiele schaffen eine Vorrichtung für ein Sende-Empfangssystem mit einem ersten Kommunikationsmodul zur Kommunikation in einem ersten Mobilfunksystem und mit einem zweiten Kommunikationsmodul zur Kommunikation in einem zweiten Mobilfunksystem. Die Vorrichtung umfasst ein Kontrollmodul ausgebildet zur Anpassung einer Sendeleistung, die in dem ersten Mobilfunksystem verwendet wird basierend auf einer Aktivität des zweiten Kommunikationsmoduls in dem zweiten Mobilfunksystem. Die Anpassung der Sendeleistung ermöglicht eine Reduktion von Störungen, die beispielsweise durch Intermodulation zweier Sendefrequenzen entstehen können. Die Anpassung basierend auf der Aktivität des zweiten Kommunikationsmoduls kann eine dynamische Anpassung ermöglichen, beispielsweise basierend auf aktuell genutzten Frequenzbändern und Sendeaktivitäten.

In manchen Ausführungsbeispielen kann die Aktivität des zweiten Kommunikationsmoduls einer Nutzung eines definierten Frequenzbands entspricht. Ein basieren der Anpassung auf der Nutzung des definierten Frequenzbands kann es ermöglichen, die Anpassung vorzunehmen, wenn durch die Nutzung bestimmter Sendefrequenzen Intermodulationseffekte zu erwarten sind.

In manchen Ausführungsbeispielen kann das definierte Frequenzband relativ zu einem Frequenzband sein, das von dem ersten Kommunikationsmodul genutzt wird. Die Relation zwischen den Frequenzbändern kann genutzt werden, um das Risiko von Störungen zwischen den Kommunikationsmodulen zu analysieren.

In zumindest einigen Ausführungsbeispielen kann das Kontrollmodul ausgebildet sein, um die Sendeleistung, die in dem ersten Mobilfunksystem verwendet wird, basierend auf der Aktivität des zweiten Kommunikationsmoduls zu senken. Eine Senkung der Sendeleistung kann Störungen reduzieren.

In zumindest manchen Ausführungsbeispielen kann das erste Kommunikationsmodul ausgebildet ist, um auf einem ersten Sendefrequenzband zu senden. Das zweite Kommunikationsmodul kann ausgebildet sein, um auf einem zweiten Sendefrequenzband zu senden. Das erste Kommunikationsmodul oder das zweite Kommunikationsmodul können ausgebildet sein, in zumindest einem Empfangsfrequenzband zu empfangen. Ein Intermodulationsprodukt eines ersten Sendesignals im ersten Sendefrequenzband und eines zweiten Sendesignals im zweiten Sendefrequenzband kann zumindest teilweise im zumindest einen Empfangsfrequenzband liegen. Eine Anpassung der Sendeleistung kann eine Ausprägung des Intermodulationsprodukts verringern und eine Störung reduzieren.

In einigen Ausführungsbeispielen kann das erste Kommunikationsmodul ausgebildet sein, gleichzeitig im ersten Sendefrequenzband zu senden und im zumindest einen Empfangsfrequenzband zu empfangen. Das zweite Kommunikationsmodul kann ausgebildet sein, gleichzeitig im zweiten Sendefrequenzband zu senden und im zumindest einen Empfangsfrequenzband zu empfangen. Beim gleichzeitigen Senden um Empfangen kann eine Anpassung der Sendeleistung Störungen am Empfänger, etwa durch Intermodulationsprodukte, reduzieren.

In manchen Ausführungsbeispielen kann die Vorrichtung ferner eine Eingangsschnittstelle umfassen. Das Kontrollmodul kann ausgebildet sein, um Information über ein Intermodulationssignal, welches auf dem Intermodulationsprodukt basiert, über die Eingangsschnittstelle zu erhalten. Das Kontrollmodul kann ferner ausgebildet sein, um Information über eine Intermodulationsleistung basierend auf der Information über das Intermodulationssignal zu bestimmen. Das Kontrollmodul kann ferner ausgebildet sein, um die Sendeleistung, die in dem ersten Mobilfunksystem verwendet wird, basierend auf der Information über die Intermodulationsleistung anzupassen. Ein Anpassen der Sendeleistung basierend auf der Intermodulationsleistung ermöglicht eine dynamische Anpassung der Sendeleistung basierend auf den resultierenden Störungen und kann eine Abhängigkeit von Störungsvorhersagen reduzieren.

In manchen Ausführungsbeispielen kann das Kontrollmodul ausgebildet sein, die Sendeleistung, die in dem ersten Mobilfunksystem verwendet wird, so anzupassen, dass die Intermodulationsleistung unter einem Schwellenwert liegt. Ein Anpassen der Sendeleistung basierend auf der Intermodulationsleistung ermöglicht eine dynamische Anpassung der Sendeleistung basierend auf den resultierenden Störungen und kann eine angemessene Höhe der Sendeleistung des ersten Kommunikationsmoduls ermöglichen.

In zumindest einigen Ausführungsbeispielen kann die Vorrichtung eine Eingangsschnittstelle umfassen. Das Kontrollmodul kann ausgebildet sein, um Information über Sendesignale des ersten Kommunikationsmoduls und des zweiten Kommunikationsmoduls über die Eingangsschnittstelle zu erhalten. Das Kontrollmodul kann ausgebildet sein, um ein voraussichtliches Intermodulationssignal basierend auf der Information über die Sendesignale des ersten Kommunikationsmoduls und des zweiten Kommunikationsmoduls zu bestimmen. Das Kontrollmodul kann ferner ausgebildet sein, um ein Interferenz-Reduktions-Signal basierend auf dem voraussichtlichen Intermodulationssignal zu bestimmen. Das Interferenz-Reduktions-Signal kann beispielsweise genutzt werden, um eine Störung des Empfangssignals zu kompensieren.

In manchen Ausführungsbeispielen kann die Vorrichtung ferner eine Ausgangsschnittstelle umfassen. Das Kontrollmodul kann ausgebildet sein, das Interferenz-Reduktions-Signal dem ersten Kommunikationsmodul und/oder dem zweiten Kommunikationsmodul über die Ausgangsschnittstelle bereitzustellen. Alternativ oder zusätzlich kann das Kontrollmodul ausgebildet sein, um eine Signalverarbeitung eines Eingangssignals des ersten Kommunikationsmoduls und/oder des zweiten Kommunikationsmoduls basierend auf dem Interferenz-Reduktionssignal bereitzustellen. Das Interferenz-Reduktions-Signal kann genutzt werden, um eine Störung des Empfangssignals zu kompensieren, beispielsweise im ersten und/oder zweiten Kommunikationsmodul oder durch eine Vorverarbeitung des Empfangssignals durch das Kontrollmodul.

In einigen Ausführungsbeispielen kann das erste Kommunikationsmodul ausgebildet sein, um in einem Nahfunkmobilfunksystem zu kommunizieren. Das zweite Kommunikationsmodul kann ausgebildet sein, in einem zellulären Mobilfunksystem zu kommunizieren. Das erste Kommunikationsmodul kann in manchen Ausführungsbeispielen eine Sendeleistung selbstständig einstellen, und das zweite Kommunikationsmodul kann in dem zellulären Mobilfunksystem abhängig von einer Einstellung der Sendeleistung durch eine Basisstation sein.

In zumindest manchen Ausführungsbeispielen kann das erste Kommunikationsmodul ausgebildet sein, in einem Nahfunkmobilfunksystem gemäß IEEE 802.11 zu kommunizieren. Das zweite Kommunikationsmodul kann ausgebildet sein, in einem Long Term Evolution-Mobilfunksystem, LTE, einem Universal Mobile Telecommunications System, UMTS, oder einem Mobilfunksystem der 5. Generation, 5G, zu kommunizieren. Das erste Kommunikationsmodul kann in manchen Ausführungsbeispielen eine Sendeleistung selbstständig einstellen, und das zweite Kommunikationsmodul kann in dem zellulären Mobilfunksystem abhängig von einer Einstellung der Sendeleistung durch eine Basisstation sein.

In zumindest einigen Ausführungsbeispielen kann das erste Mobilfunksystem ein Infrastruktur-basiertes Kommunikationssystem sein. Das erste Kommunikationsmodul kann ausgebildet sein, als Client in dem ersten Mobilfunksystem zu kommunizieren. Das erste Kommunikationsmodul kann in manchen Ausführungsbeispielen eine Sendeleistung selbstständig einstellen.

Ausführungsbeispiele schaffen ferner ein Verfahren für ein Sende-Empfangssystem zur Kommunikation in zwei Mobilfunksystemen. Das Verfahren umfasst Kommunizieren in einem ersten Mobilfunksystem. Das Verfahren umfasst ferner Kommunizieren in einem zweiten Mobilfunksystem. Das Verfahren umfasst ferner Anpassen einer Sendeleistung, die in dem ersten Mobilfunksystem verwendet wird basierend auf einer Aktivität in dem zweiten Mobilfunksystem.

Ausführungsbeispiele schaffen ferner ein Programm mit einem Programmcode zum Durchführen des Verfahrens wenn der Programmcode auf einem Computer, einem Prozessor, einem Kontrollmodul oder einer programmierbaren Hardwarekomponente ausgeführt wird.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:

Fig. 1    illustriert ein Blockdiagramm eines Ausführungsbeispiels einer Vorrichtung für ein Sende-Empfangssystem mit einem ersten Kommunikationsmodul zur Kommunikation in einem ersten Mobilfunksystem und mit einem zweiten Kommunikationsmodul zur Kommunikation in einem zweiten Mobilfunksystem;

Fig. 1a    illustriert ein Blockdiagramm eines weiteren Ausführungsbeispiels der Vorrichtung für das Sende-Empfangssystem;

Fig. 2    zeigt beispielhaft die Frequenzbändern verschiedener Mobilfunksysteme in einem Teilbereich des Dezimeterwellen-Frequenzbereichs;

Fig. 3a    zeigt beispielhaft eine Systemarchitektur für zwei Kommunikationsmodule;

Fig. 3b-3d    zeigen Beispielhaft Quellen von Intermodulationssignalen in der Systemarchitektur;

Fig. 4    zeigt beispielhaft eine Tabelle von möglichen Störungen durch Intermodulationsprodukte zwischen LTE Band 7 und 2,4GHz WLAN; und

Fig. 5    zeigt ein Flussdiagramm eines Ausführungsbeispiels eines Verfahrens für ein Sende-Empfangssystem zur Kommunikation in zwei Mobilfunksystemen.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer," " eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

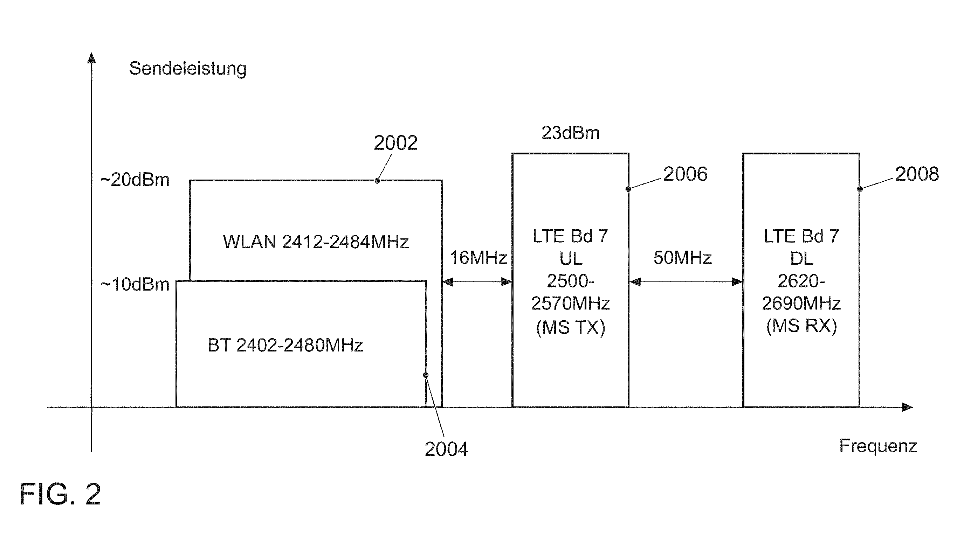

Das Frequenzspektrum, in dem Mobilfunksysteme Funkressourcen nutzen, ist begrenzt. Vor allem im für Mobilfunksysteme interessanten Dezimeterwellen-Frequenzbereich (auch engl. I. Ultra High Frequency (UHF) frequency range) werden Frequenzbänder von einer Vielzahl von verschiedenen Mobilfunksystemen genutzt. Fig. 2 zeigt beispielhaft Frequenzbänder verschiedener Mobilfunksysteme in einem Teilbereich von UHF. Kabellose Lokale Zusatznetzwerke (auch engl Wireless Local Access Network, WLAN) 2002 nutzen Frequenzbändern zwischen 2412 MHz und 2484 MHz , Bluetooth-Nahfunk-Mobilfunksysteme 2004 nutzen dazu überlappend Frequenzbänder zwischen 2400 MHz und 2480 MHz, und Long Term Evolution (LTE), ein zelluläres Mobilfunksystem nutzt beispielsweise u.a. die Frequenzbänder 2620 MHz - 2690 MHz 2008 für den Empfang am mobilen Endgerät und 2500 MHz - 2570 MHz 2006 für das Senden am mobilen Endgerät (LTE Band 7).

Durch die Nutzung von verschiedenen Funksystemen an nicht-linearen Komponenten und Baugruppen können dabei beispielsweise Intermodulationsprodukte entstehen. Aus zwei Nutzsignalen können beispielsweise Intermodulationsprodukte verschiedener Ordnungen entstehen, beispielsweise dritter Ordnung. Für diese gilt beispielhaft:

$$ f_{im_{3,1}} = 2 \cdot f_1 - f_2 \text{ bzw. } f_{im_{3,2}} = f_1 - 2 \cdot f_2 $$

Aufgrund der genutzten Frequenzbänder kann aus einem WLAN Sendesignal und einem LTE Band 7 Sendesignal ein Störer, der in den entsprechenden LTE Band 7 Empfangskanal fällt, entstehen.

Diese Intermodulationsprodukte können beispielhaft sowohl in Funkkomponenten des WLAN-Kommunikationsmoduls als auch in Funkkomponenten des LTE-Funkmodules entstehen. Hier können intern verwendeten Filter in manchen Situationen den Effekt abzumildern.

Zusätzlich können sie entstehen an nichtlinearen Komponenten in einem Dachantennenmodul (z.B. Satellite Digital Audio Radio Services (SDARS, Digitaler Satellitengestützter Rundfunkdienst)-Empfänger, WLAN Modul o.ä.) entstehen und können nicht immer gefiltert werden.

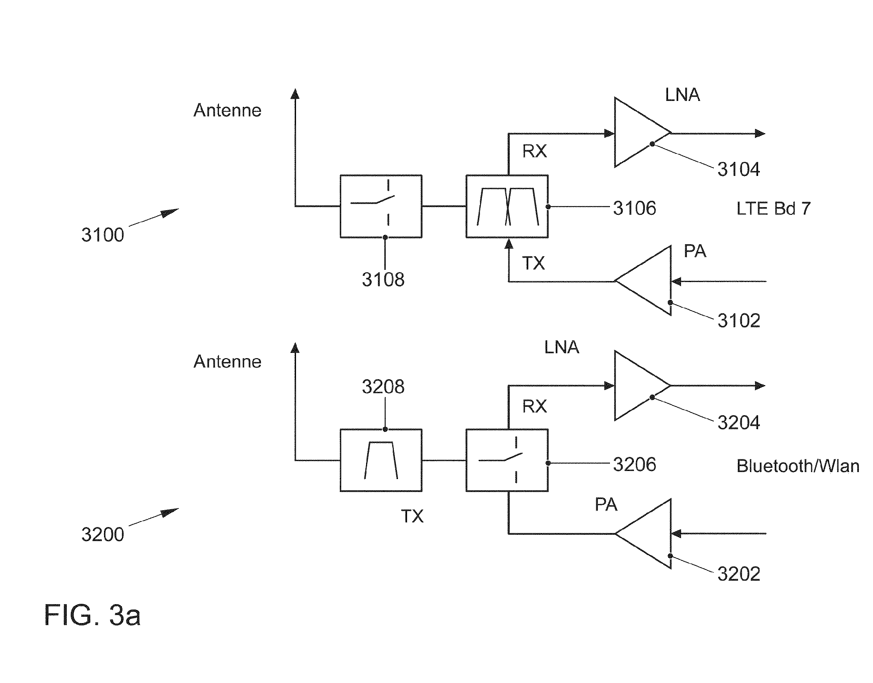

Fig. 3a zeigt beispielhaft eine Systemarchitektur für zwei Kommunikationsmodule 3100 und 3200. In Fig. 3a sind die Kommunikationsmodule beispielhaft ausgebildet zur Kommunikation über LTE Band 7 (3100) bzw. Bluetooth und WLAN (3200). Die Kommunikationsmodule umfassen ferner Leistungsverstärker (auch engl. Power Amplifier, PA) 3102 und 3202 für Sendepfade der Kommunikationsmodule und rauscharme Vorverstärker (auch engl. Low Noise Amplifier, LNA) 3104 und 3204 für Empfangspfade der Kommunikationsmodule. Fig. 3a zeigt ferner beispielhaft ein Filtermodul / Duplexer 3106 und ein Auswahlmodul für LTE-Frequenzbänder 3108 für das LTE-Kommunikationsmodul 3100. Fig. 3a zeigt ferner beispielhaft einen Schalter 3206 zwischen Sende- und Empfangspfad des Bluetooth und WLAN-Kommunikationsmoduls 3200 und ein Filtermodul 3208 für das Bluetooth und WLAN-Kommunikationsmodul 3200.

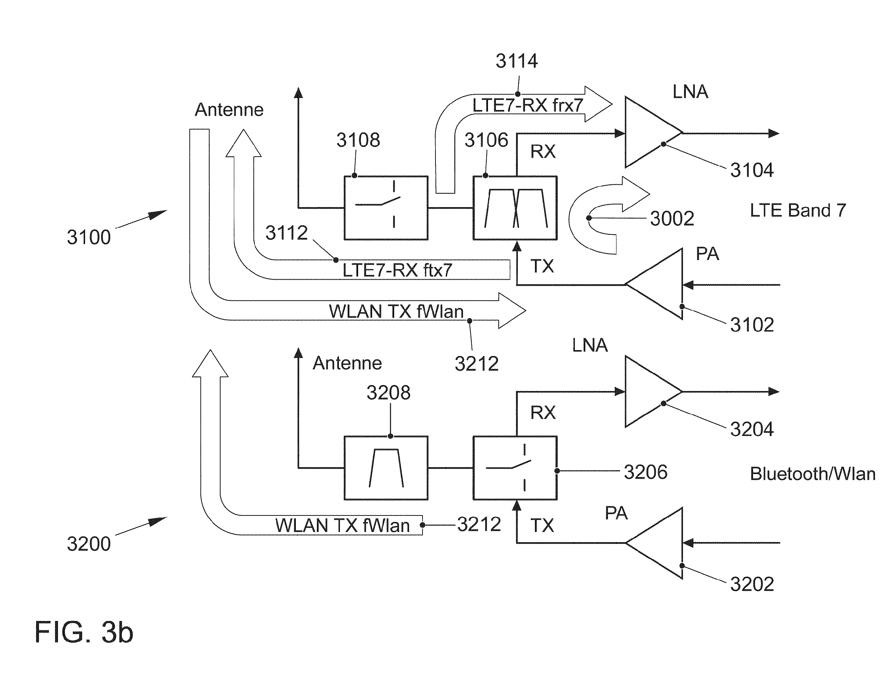

Fig. 3b zeigt beispielhaft ein Entstehen einer Störung durch Intermodulationseffekte in der Systemarchitektur. Ein Sendesignal 3212 WLAN TX $f_{WLAN}$ des Bluetooth und WLAN-Kommunikationsmoduls 3200 wird beispielhaft über ein Antennenmodul, das die zwei Kommunikationsmodule 3100; 3200 gemeinsam nutzen, zum LTE-Kommunikationsmodul 3100 übertragen und bildet mit einem Sendesignal 3112 LTE7 TX $f_{tx7}$ des LTE-Kommunikationsmoduls 3100 ein Intermodulationssignal 3002 basierend auf $2 \cdot f_{tx7} - f_{wlan} = f_{rx7}$, das ein Empfangssignal 3114 LTE7 RX $f_{rx7}$ des LTE-Kommunikationsmoduls 3100 stören kann. Das Intermodulationssignal 3002 entsteht dabei beispielhaft in dem LTE-Kommunikationsmodul 3100. Das Intermodulationssignal 3002 und/oder das Sendesignal 3212 können dabei beispielsweise an dem Filtermodul 3106 (beispielsweise einem Duplexer) gefiltert werden.

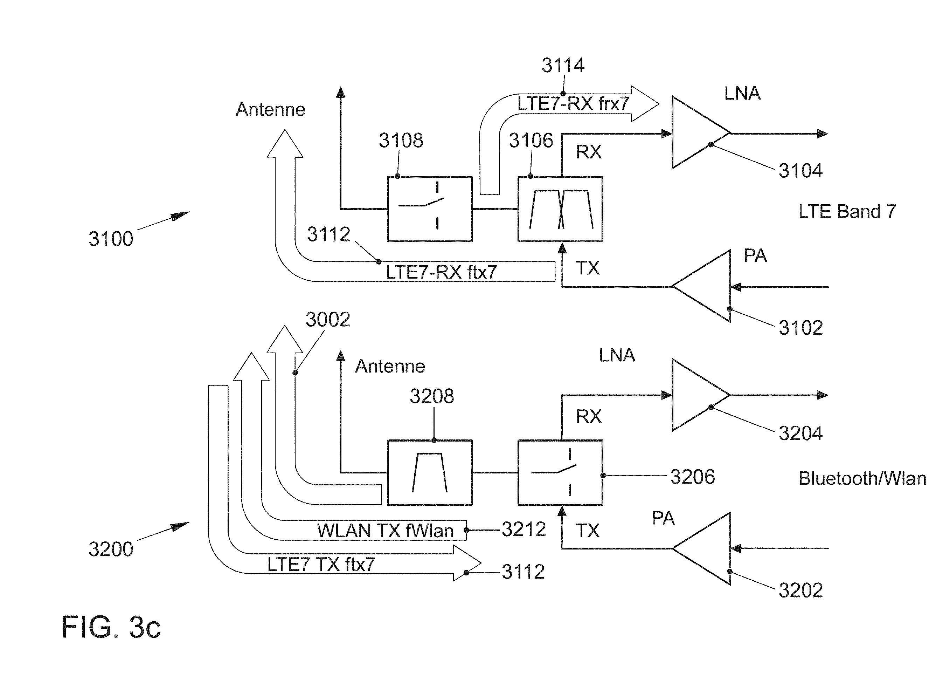

Fig. 3c zeigt eine weitere beispielhafte Möglichkeit für ein Entstehen der Störung. Dabei wird das Sendesignal 3112 des LTE-Kommunikationsmoduls 3100 über das gemeinsame Antennenmodul zum WLAN-Kommunikationsmodul 3200 übertragen und bildet dort, beispielsweise im Duplexer 3208, zusammen mit dem Sendesignal 3212 des Bluetooth und WLAN Kommunikationsmoduls 3200 das Intermodulationssignal 3002. Dieses kann dann beispielsweise über das gemeinsame Antennenmodul in das LTE-Kommunikationsmodul 3100 übertragen werden und das Empfangssignal 3114 stören. Dabei kann in manchen Systemarchitekturen keine Filterung möglich sein, die Störung kann allerdings beispielsweise über eine Antennenisolation oder Pegelabsenkung beeinflussbar sein.

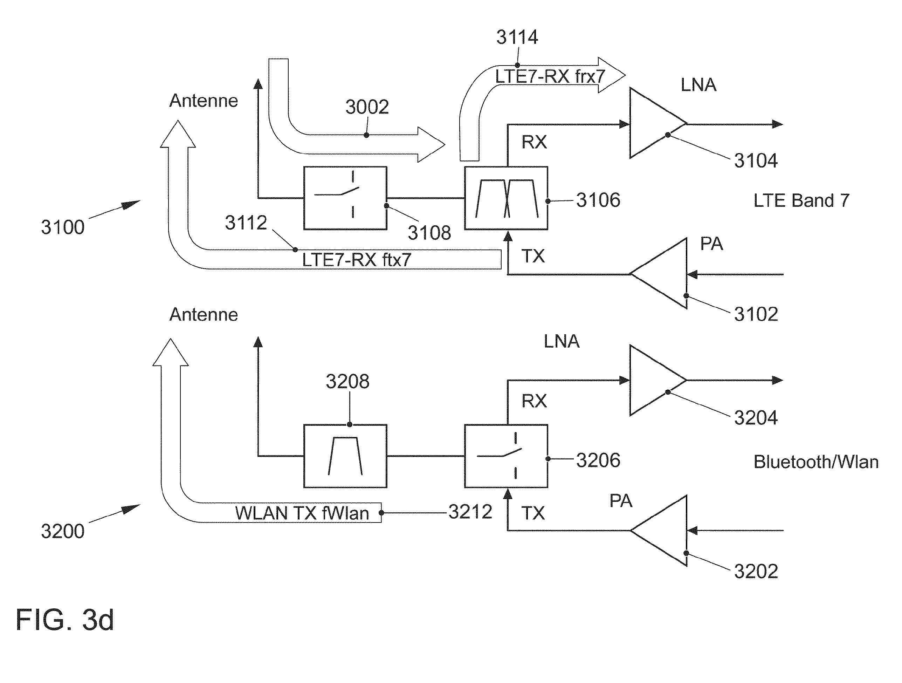

Fig. 3d zeigt eine weitere beispielhafte Möglichkeit für ein Entstehen der Störung. Sowohl das Sendesignal 3112 des LTE-Kommunikationsmoduls 3100 als auch das Sendesignal 3212 des Bluetooth und WLAN Kommunikationsmoduls 3200 bilden im Antennenmodul das das Intermodulationssignal 3002. Dieses kann dann in das LTE-Kommunikationsmodul 3100 übertragen werden und das Empfangssignal 3114 stören. Dabei kann in manchen Systemarchitekturen wiederum keine Filterung möglich sein, die Baugruppen könnten allerdings eine entsprechende Intermodulationsfestigkeit aufweisen.

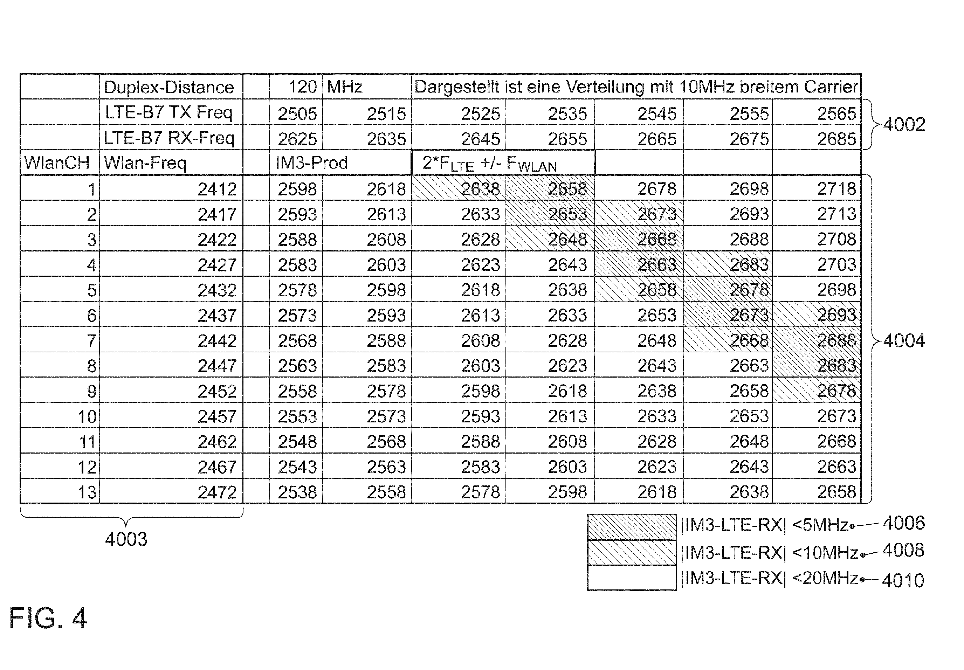

Fig. 4 zeigt beispielhaft eine Tabelle von möglichen Störungen durch Intermodulationsprodukte zwischen LTE Band 7 und 2,4GHz WLAN. 4002 zeigt Sende- und Empfangsfrequenzen von LTE Band 7 mit 10 MHz breitem Frequenzband. 4003 zeigt eine Liste von Frequenzen von WLAN-Kanälen im 2,4GHz Frequenzband. 4004 zeigt eine Matrix von möglichen Intermodulationsprodukten der 3. Ordnung (2 · $F_{LTE} \pm F_{WLAN}$) zwischen den LTE-Sendefrequenzen von 4002 und den Frequenzen der WLAN-Kanäle 4003. Markierungen 4006; 4008 und 4010 kennzeichnen dabei Intermodulationsprodukte, die innerhalb von 5 MHz; 10 MHz und 20 MHz um die Empfangsfrequenzen von LTE Band 7 entstehen können.

Zumindest manche Ausführungsbeispielen können ein Entstehen von Störungen beispielhaft durch Absenken der Sendeleistung des WLAN-Moduls 3200 bei LTE-Band 7 Betrieb im LTE-Kommunikationsmodul 3100 vermindern oder verhindern. Eine Möglichkeit der Absenkung der LTE Sendeleistung kann dabei durch eine Spezifikation des LTE Standards beschränkt sein. Durch Absenkung der WLAN TX-Leistung kann sich eine Leistung des Intermodulationsprodukts verringern. Die Absenkung kann beispielsweise durch eine Bestimmung einer Intermodulationsleistung an der Antenne ausgelöst werden, oder das LTE-Modul 3100 kann Information über das Intermodulationssignal bereitstellen. Im Falle einer Schnittstelle zwischen WLAN- 3200 und LTE-Modul 3100 kann die Absenkung beispielsweise Kanalselektiv vorgenommen werden.

In Zeitaufteilungsduplex-Systemen (auch engl. Time Division Duplex, TDD) kann die Intermodulationsfestigkeit eine untergeordnete Rolle spielen, da TX- und RX-Signal nicht gleichzeitig auftreten. Die Isolationsanforderungen können sich unter Berücksichtigung der Frequenzbelegung übertragen lassen.

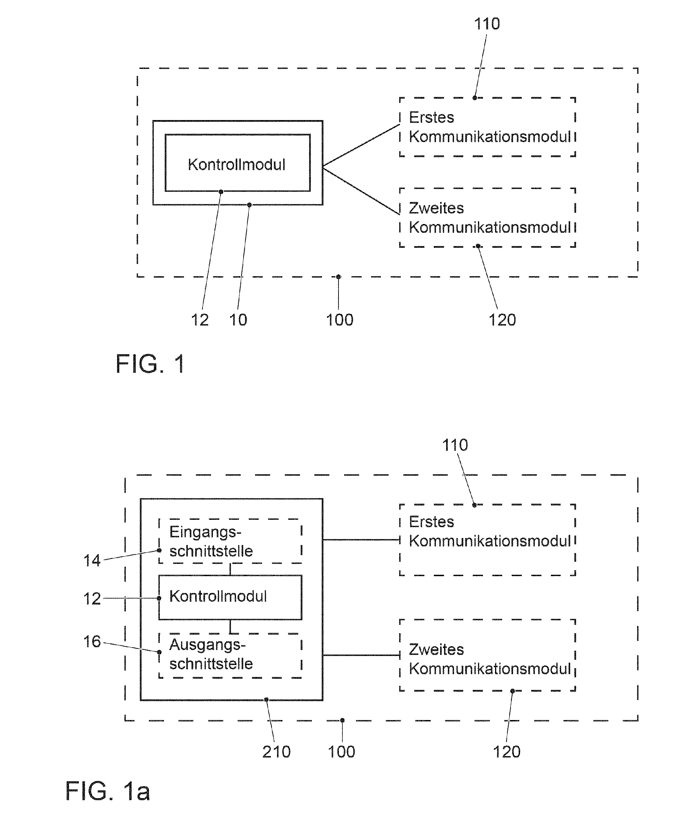

Fig. 1 illustriert ein Blockdiagramm eines Ausführungsbeispiels einer Vorrichtung 10 für ein Sende-Empfangssystem 100 mit einem ersten Kommunikationsmodul 110 zur Kommunikation in einem ersten Mobilfunksystem und mit einem zweiten Kommunikationsmodul 120 zur Kommunikation in einem zweiten Mobilfunksystem. In manchen Ausführungsbeispielen kann das Sende-Empfangssystem 100 beispielsweise einem Sende-Empfangssystem eines Fahrzeugs entsprechen. Ausführungsbeispiele schaffen ferner ein Fahrzeug umfassend das Sende-Empfangssystem 100.

Das erste Kommunikationsmodul 110 und/oder das zweite Kommunikationsmodul 120 können in Ausführungsbeispielen typische Sender- bzw. Empfängerkomponenten enthalten. Darunter können beispielsweise ein oder mehrere Antennen, ein oder mehrere Filter, ein oder mehrere Mischer, ein oder mehrere Verstärker, ein oder mehrere Diplexer, ein oder mehrere Duplexer, usw. fallen. Das erste Kommunikationsmodul 110 und/oder das zweite Kommunikationsmodul 120 können in Ausführungsbeispielen zumindest einem Element der Gruppe von WLAN-Kommunikationsmodul, Bluetooth-Kommunikationsmodul, Mobilfunk-Kommunikationsmodul, UMTS-Kommunikationsmodul, LTE-Kommunikationsmodul, Kommunikationsmodul eines Mobilfunknetzes der 5. Generation, Nahfunk-Kommunikationsmodul und Kommunikationsmodul für ein zelluläres Mobilfunknetzwerk entsprechen. Das erste Kommunikationsmodul 110 kann beispielsweise dem LTE-Kommunikationsmodul 3100 entsprechen, und das zweite Kommunikationsmodul kann beispielsweise dem Bluetooth und WLAN Kommunikationsmodul 3200 entsprechen.

Das erste Mobilfunksystem und/oder das zweite Mobilfunksystem können beispielsweise zumindest einem Element der Gruppe von WLAN, IEEE 802.11, Bluetooth, zellulärer Mobilfunk, UMTS, LTE, Mobilfunknetz der 5. Generation und Nahfunk entsprechen.

In manchen Ausführungsbeispielen kann das erste Kommunikationsmodul 110 ausgebildet sein, um in einem Nahfunkmobilfunksystem zu kommunizieren. Das zweite Kommunikationsmodul 120 kann ausgebildet sein, um in einem zellulären Mobilfunksystem zu kommunizieren. Das Nahfunkmobilfunksystem kann beispielsweise einem Nahfunkmobilfunksystem gemäß IEEE 802.11, WLAN, einem Bluetooth, oder einem Nahfeldkommunikationssystem (auch engl. Near Field Communication, NFC) entsprechen. IEEE steht hierbei für Institute of Electrical and Electronics Engineers, Institut für Elektro- und Elektronikingenieure, und IEEE 802.11 ist ein Standard für Nahfunkmobilfunksysteme.

In zumindest einigen Ausführungsbeispielen kann das erste Kommunikationsmodul 110 ausgebildet sein, in einem Nahfunkmobilfunksystem gemäß IEEE 802.11 zu kommunizieren. Das zweite Kommunikationsmodul 120 kann ausgebildet sein, um in einem Long Term Evolution- Mobilfunksystem, LTE, einem Universal Mobile Telecommunications System, UMTS, oder einem Mobilfunksystem der 5. Generation, 5G, zu kommunizieren.

In manchen Ausführungsbeispielen kann das erste Mobilfunksystem ein Infrastruktur-basiertes Kommunikationssystem sein. Das erste Kommunikationsmodul 110 kann ausgebildet sein, als Client in dem ersten Mobilfunksystem zu kommunizieren. Das erste Mobilfunksystem kann beispielsweise ferner einen Zugangspunkt (auch engl. Access Point) umfassen, und das erste Kommunikationsmodul kann ausgebildet sein, als Client mit dem Zugangspunkt zu kommunizieren.

Die Vorrichtung 10 umfasst ein Kontrollmodul 12 ausgebildet zur Anpassung einer Sendeleistung, die in dem ersten Mobilfunksystem verwendet wird, basierend auf einer Aktivität des zweiten Kommunikationsmoduls 120 in dem zweiten Mobilfunksystem. Beispielsweise kann das Kontrollmodul ausgebildet sein, um die Sendeleistung, die in dem ersten Mobilfunksystem verwendet wird, basierend auf der Aktivität des zweiten Kommunikationsmoduls zu senken. Beispielsweise kann das Kontrollmodul 12 ausgebildet sein, die Sendeleistung des ersten Kommunikationsmoduls 110 anzupassen zur Anpassung der Sendeleistung, die im ersten Mobilfunksystem verwendet wird, beispielsweise durch Senkung oder Erhöhung der Sendeleistung des ersten Kommunikationsmoduls 110. Alternativ oder zusätzlich kann das Kontrollmodul 12 ausgebildet sein, über das erste Kommunikationsmodul 110, Gegenstellen des ersten Kommunikationsmoduls 110 im ersten Mobilfunksystem Information über eine Anpassung der Sendeleistung bereitzustellen, zur Anpassung der Sendeleistung der Gegenstellen im ersten Mobilfunksystem.

In Ausführungsbeispielen kann das Kontrollmodul 12 einem beliebigen Controller oder Prozessor oder einer programmierbaren Hardwarekomponente entsprechen. Beispielsweise kann das Kontrollmodul 12 auch als Software realisiert sein, die für eine entsprechende Hardwarekomponente programmiert ist. Insofern kann das Kontrollmodul 12 als programmierbare Hardware mit entsprechend angepasster Software implementiert sein. Dabei können beliebige Prozessoren, wie Digitale SignalProzessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 12 denkbar.

Die Aktivität des zweiten Kommunikationsmoduls 120 kann beispielsweise einer Nutzung eines definierten Frequenzbands entsprechen. Das definierte Frequenzband kann beispielsweise ein Frequenzband von einer Mehrzahl von Frequenzbändern entsprechen, die beispielsweise in einer Tabelle, in einer Datenbank oder in Konfigurationsdaten umfasst sind. Alternativ oder zusätzlich kann das definierte Frequenzband relativ zu einem Frequenzband sein, das von dem ersten Kommunikationsmodul 110 genutzt wird. Beispielsweise kann das definierte Frequenzband mit dem Frequenzband des ersten Kommunikationsmoduls 110 Intermodulationsprodukte bilden, die zumindest teilweise in einem Empfangsfrequenzbands des ersten 110 oder zweiten 120 Kommunikationsmoduls liegen. Alternativ oder zusätzlich kann die Aktivität des zweiten Kommunikationsmoduls 120 beispielsweise einer Sendeaktivität, einer Überschreitung einer Sendeleistung in einem Frequenzband, und/oder einer Unterschreitung eines Signal-zu-Rausch-Abstands in einem Empfangsfrequenzband des zweiten Kommunikationsmoduls entsprechen.

In zumindest manchen Ausführungsbeispielen kann das erste Kommunikationsmodul 110 ausgebildet sein, um auf einem ersten Sendefrequenzband zu senden. Das zweite Kommunikationsmodul 120 kann ausgebildet sein, um auf einem zweiten Sendefrequenzband zu senden. Das erste Kommunikationsmodul 110 oder das zweite Kommunikationsmodul 120 kann ausgebildet sein, um in zumindest einem Empfangsfrequenzband zu empfangen. Ein Intermodulationsprodukt eines ersten Sendesignals im ersten Sendefrequenzband und eines zweiten Sendesignals im zweiten Sendefrequenzband kann zumindest teilweise im zumindest einen Empfangsfrequenzband liegen. In einigen Ausführungsbeispielen kann das erste Kommunikationsmodul 110 ausgebildet sein, gleichzeitig im ersten Sendefrequenzband zu senden und im zumindest einen Empfangsfrequenzband zu empfangen. Alternativ oder zusätzlich kann das zweite Kommunikationsmodul 120 ausgebildet sein, um gleichzeitig im zweiten Sendefrequenzband zu senden und im zumindest einen Empfangsfrequenzband zu empfangen. Die Frequenzbänder können beispielsweise Frequenzbändern entsprechen, die in den oben genannten Mobilfunksystem genutzt werden.

Fig. 1a illustriert ein Blockdiagramm eines weiteren Ausführungsbeispiels der Vorrichtung 10 als Erweiterung von Fig. 1. Fig. 1a zeigt die Vorrichtung 10 zusätzlich umfassend eine optionale Eingangsschnittstelle 14 und eine optionale Ausgangsschnittstelle 16. Die optionale Eingangsschnittstelle 14 und die optionale Ausgangsschnittstelle 16 sind mit dem Kontrollmodul 12 gekoppelt.

Die Eingangsschnittstelle 14 kann beispielsweise einem oder mehreren Eingängen zum Empfangen von Informationen oder Signalen entsprechen, etwa in digitalen Bitwerten, Spannungen, Stromstärken oder Elektromagnetischen Wellen, beispielsweise basierend auf einem Code, innerhalb eines Moduls, zwischen Modulen, oder zwischen Modulen verschiedener Entitäten. Die Ausgangsschnittstelle 16 kann beispielsweise einem oder mehreren Ausgängen zum Übertragen von Informationen oder Signalen entsprechen, etwa in digitalen Bitwerten, Spannungen, Stromstärken oder Elektromagnetischen Wellen, beispielsweise basierend auf einem Code, innerhalb eines Moduls, zwischen Modulen, oder zwischen Modulen verschiedener Entitäten. Die Eingangsschnittstelle 14 und die Ausgangsschnittstelle 16 können beispielsweise in einem Sende-Empfängermodul zusammengefasst sein.

In manchen Ausführungsbeispielen kann das Kontrollmodul 12 ausgebildet sein, um Information über ein Intermodulationssignal, welches auf dem Intermodulationsprodukt basiert, über die Eingangsschnittstelle 14 zu erhalten. Das Intermodulationssignal kann beispielsweise auf einem ersten Sendesignal des ersten Kommunikationsmoduls 110 und einem zweiten Sendesignal des zweiten Kommunikationsmoduls 120 basierend, und kann beispielsweise in einer nicht-linearen Komponente des ersten Kommunikationsmoduls 110, des zweiten Kommunikationsmoduls 120, eines Antennenmoduls des Sende-Empfangssystem 100, und/oder einer weiteren nicht-linearen Komponente des Sende-Empfangssystems 100 entstehen. Die Information über das Intermodulationssignal kann beispielsweise dem Intermodulationssignal entsprechen, oder beispielsweise Eigenschaften des Signals, beispielsweise einer Frequenz und einer Amplitude, die von dem ersten Kommunikationsmodul 110 oder von dem zweiten Kommunikationsmodul 120 erfasst wurden.

Das Kontrollmodul 12 kann ferner ausgebildet sein, um Information über eine Intermodulationsleistung basierend auf der Information über das Intermodulationssignal zu bestimmen. Die Intermodulationsleistung kann beispielsweise auf einer Amplitude oder Leistung des Intermodulationssignals basieren, etwa in einem Empfangsmodul des ersten Kommunikationsmoduls 110 oder des zweiten Kommunikationsmoduls 120.

Das Kontrollmodul 12 kann ferner ausgebildet sein, die Sendeleistung, die in dem ersten Mobilfunksystem verwendet wird, basierend auf der Information über die Intermodulationsleistung anzupassen. Das Kontrollmodul 12 kann beispielsweise ausgebildet sein, um die Sendeleistung, die in dem ersten Mobilfunksystem verwendet wird, so anzupassen, dass die Intermodulationsleistung unter einem Schwellenwert liegt. Der Schwellenwert kann beispielsweise einer oberen Grenze für die Leistung oder Amplitude des Intermodulationssignals entsprechen, und kann beispielsweise auf einem gewünschten Signal-zu-Rausch-Abstand in einem Empfangsmodul des ersten Kommunikationsmoduls 110 oder des zweiten Kommunikationsmoduls 120 basieren.

In zumindest manchen Ausführungsbeispielen kann das Kontrollmodul 12 ausgebildet sein, um Information über Sendesignale des ersten Kommunikationsmoduls 110 und des zweiten Kommunikationsmoduls 120 über die Eingangsschnittstelle 14 zu erhalten. Die Information über die Sendesignale kann beispielsweise zumindest ein Element der Gruppe von die Sendesignale, Information über Bitwerte der Sendesignale, Information über eine Vorverzerrung der Sendesignale, und Information über eine Übertragungsfunktion zumindest eines Teilstücks einer Übertragungsstrecke der Sendesignale umfassen. Das Kontrollmodul 12 kann ausgebildet sein, um ein voraussichtliches Intermodulationssignal basierend auf der Information über die Sendesignale des ersten Kommunikationsmoduls 110 und des zweiten Kommunikationsmoduls 120 zu bestimmen. Das Kontrollmodul 12 kann beispielsweise ausgebildet sein, das voraussichtliche Intermodulationssignal basierend auf zumindest einem Element der Gruppe von die Sendesignale, Information über Bitwerte der Sendesignale, Information über eine Vorverzerrung der Sendesignale, Information über eine Übertragungsfunktion zumindest eines Teilstücks einer Übertragungsstrecke der Sendesignale, und Information über zumindest ein Charakteristikum einer Empfangseinheit des ersten Kommunikationsmoduls 110 und/oder des zweiten Kommunikationsmoduls zu bestimmen. Das Kontrollmodul 12 kann ferner ausgebildet sein, ein Interferenz-Reduktions-Signal basierend auf dem voraussichtlichen Intermodulationssignal zu bestimmen. Das Interferenz-Reduktions-Signal kann beispielsweise einem Signal zur Kompensation des voraussichtlichen Intermodulationssignals in einer Empfangseinheit entsprechen. Das Kontrollmodul 12 kann beispielsweise ferner ausgebildet sein, um das Interferenz-Reduktions-Signal dem ersten Kommunikationsmodul 110 und/oder dem zweiten Kommunikationsmodul 120 über die Ausgangsschnittstelle 16 bereitzustellen, beispielsweise zur Reduktion einer Störung durch das Intermodulationssignal. Alternativ oder zusätzlich kann das Kontrollmodul 12 ausgebildet sein, um eine Signalverarbeitung eines Eingangssignals des ersten Kommunikationsmoduls 110 und/oder des zweiten Kommunikationsmoduls 120 basierend auf dem Interferenz-Reduktionssignal bereitzustellen, beispielsweise um einen Einfluss des Intermodulationssignals auf das Empfangssignal zu verringern oder zu unterdrücken. In manchen Ausführungsbeispielen kann die Vorrichtung 10 bzw. die Eingangsschnittstelle 14, das Kontrollmodul 16 und/oder die Ausgangsschnittstelle 16 zwischen einem Antennenmodul des Sende-Empfangssystems 100 und einem Antenneneingang des ersten Kommunikationsmoduls 110 und/oder des zweiten Kommunikationsmoduls 120 angeordnet sein.

Ausführungsbeispiele schaffen ferner das Sende-Empfangssystem umfassend das erste Kommunikationsmodul 110, das zweite Kommunikationsmodul 120 und die Vorrichtung 10.

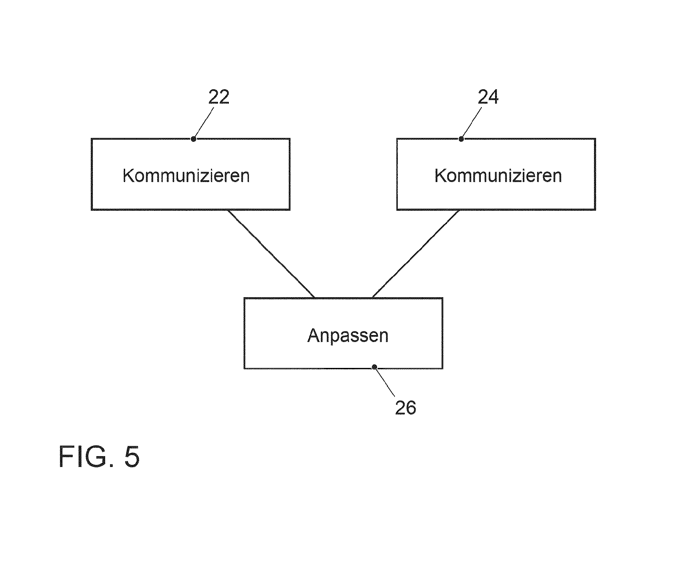

Fig. 5 zeigt ein Flussdiagramm eines Ausführungsbeispiels eines Verfahrens für ein Sende-Empfangssystem 100 zur Kommunikation in zwei Mobilfunksystemen. Das Verfahren umfasst Kommunizieren 22 in einem ersten Mobilfunksystem. Das Verfahren umfasst ferner Kommunizieren 24 in einem zweiten Mobilfunksystem. Das Verfahren umfasst ferner Anpassen 26 einer Sendeleistung, die in dem ersten Mobilfunksystem verwendet wird basierend auf einer Aktivität in dem zweiten Mobilfunksystem.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Bezugszeichenliste**

| | |
|---|---|
| 10 | Vorrichtung |
| 12 | Kontrollmodul |
| 14 | Eingangsschnittstelle |
| 16 | Ausgangsschnittstelle |
| 22 | Kommunizieren |
| 24 | Kommunizieren |
| 26 | Anpassen |
| 100 | Sende-Empfangssystem |
| 110 | Erstes Kommunikationsmodul |
| 120 | Zweites Kommunikationsmodul |
| 2002 | 2,4 GHz WLAN-Frequenzbänder |
| 2004 | Bluetooth Frequenzbänder |
| 2006 | Sendefrequenzbänder LTE Band 7 |
| 2008 | Empfangsfrequenzbänder LTE Band 7 |
| 3002 | Intermodulationssignal |
| 3100 | LTE-Kommunikationsmodul |
| 3102 | Leistungsverstärker |
| 3104 | Vorverstärker mit geringem Rauschen |
| 3106 | Filtermodul / Duplexer |
| 3108 | Auswahlmodul für LTE-Frequenzbänder |
| 3112 | Sendesignal des LTE-Kommunikationsmoduls |
| 3114 | Empfangssignal des LTE-Kommunikationsmo- |

duls
3200    Bluetooth und WLAN-Kommunikationsmodul
3202    Leistungsverstärker
3204    Vorverstärker mit geringem Rauschen
3206    Schalter zwischen Sende- und Empfangspfad des Bluetooth und WLAN-Kommunikationsmoduls
3208    Filtermodul
3212    Sendesignal des Bluetooth und WLAN-Kommunikationsmoduls
3214    Empfangssignal des Bluetooth und WLAN-Kommunikationsmoduls
4002    Sende- und Empfangsfrequenzen in LTE Band 7
4003    Frequenzen von WLAN-Kanälen im 2,4 GHz-Frequenzband
4004    Matrix von möglichen Intermodulationsprodukten
4006    Markierung von Intermodulationsprodukten innerhalb von 5 MHz um LTE Band 7 Empfangsfrequenz
4008    Markierung von Intermodulationsprodukten innerhalb von 10 MHz um LTE Band 7 Empfangsfrequenz
4010    Markierung von Intermodulationsprodukten innerhalb von 20 MHz um LTE Band 7 Empfangsfrequenz.

**Patentansprüche**

1. Vorrichtung (10) für ein Sende-Empfangssystem (100) mit einem ersten Kommunikationsmodul (110) zur Kommunikation in einem ersten Mobilfunksystem und mit einem zweiten Kommunikationsmodul (120) zur Kommunikation in einem zweiten Mobilfunksystem, die Vorrichtung (10) umfassend ein Kontrollmodul (12) ausgebildet zur Anpassung einer Sendeleistung, die in dem ersten Mobilfunksystem verwendet wird, basierend auf einer Aktivität des zweiten Kommunikationsmoduls (120) in dem zweiten Mobilfunksystem.

2. Vorrichtung (10) gemäß Anspruch 1, wobei die Aktivität des zweiten Kommunikationsmoduls (120) einer Nutzung eines definierten Frequenzbands entspricht.

3. Vorrichtung (10) gemäß Anspruch 2, wobei das definierte Frequenzband relativ zu einem Frequenzband ist, das von dem ersten Kommunikationsmodul (110) genutzt wird.

4. Vorrichtung (10) gemäß einem der vorhergehenden Ansprüche, wobei das Kontrollmodul (12) ausgebildet ist, die Sendeleistung, die in dem ersten Mobilfunksystem verwendet wird, basierend auf der Aktivität des zweiten Kommunikationsmoduls (120) zu senken.

5. Vorrichtung (10) gemäß einem der vorhergehenden Ansprüche, wobei das erste Kommunikationsmodul (110) ausgebildet ist, auf einem ersten Sendefrequenzband zu senden, wobei das zweite Kommunikationsmodul (120) ausgebildet ist, auf einem zweiten Sendefrequenzband zu senden, und wobei das erste Kommunikationsmodul (110) oder das zweite Kommunikationsmodul (120) ausgebildet ist, in zumindest einem Empfangsfrequenzband zu empfangen, und wobei ein Intermodulationsprodukt eines ersten Sendesignals im ersten Sendefrequenzband und eines zweiten Sendesignals im zweiten Sendefrequenzband zumindest teilweise im zumindest einen Empfangsfrequenzband liegt.

6. Vorrichtung (10) gemäß Anspruch 5, wobei das erste Kommunikationsmodul (110) ausgebildet ist, gleichzeitig im ersten Sendefrequenzband zu senden und im zumindest einen Empfangsfrequenzband zu empfangen, und/oder wobei das zweite Kommunikationsmodul (120) ausgebildet ist, gleichzeitig im zweiten Sendefrequenzband zu senden und im zumindest einen Empfangsfrequenzband zu empfangen.

7. Vorrichtung (10) gemäß Anspruch 5 ferner umfassend eine Eingangsschnittstelle (14), wobei das Kontrollmodul (12) ausgebildet ist, um Information über ein Intermodulationssignal, welches auf dem Intermodulationsprodukt basiert, über die Eingangsschnittstelle (14) zu erhalten, wobei das Kontrollmodul (12) ferner ausgebildet ist, um Information über eine Intermodulationsleistung basierend auf der Information über das Intermodulationssignal zu bestimmen, und wobei das Kontrollmodul (12) ferner ausgebildet ist, die Sendeleistung, die in dem ersten Mobilfunksystem verwendet wird, basierend auf der Information über die Intermodulationsleistung anzupassen.

8. Vorrichtung (10) gemäß Anspruch 6, wobei das Kontrollmodul (12) ausgebildet ist, die Sendeleistung, die in dem ersten Mobilfunksystem verwendet wird, so anzupassen, dass die Intermodulationsleistung unter einem Schwellenwert liegt.

9. Vorrichtung (10) gemäß einem der vorhergehenden Ansprüche ferner umfassend eine Eingangsschnittstelle (14), wobei das Kontrollmodul (12) ausgebildet ist, Information über Sendesignale des ersten Kommunikationsmoduls (110) und des zweiten Kommunikationsmoduls (120) über die Eingangsschnittstelle (14) zu erhalten, wobei das Kontrollmodul (12) ausgebildet ist, ein voraussichtliches Intermodulationssignal basierend auf der Information über die Sendesignale des ersten Kommunikationsmoduls (110) und des zweiten Kommunikationsmoduls (120) zu bestimmen, und wobei das Kontrollmodul (12) ferner ausgebildet ist, ein Interferenz-Reduktions-Signal basierend auf dem voraussichtlichen Intermodulationssignal zu bestimmen.

10. Vorrichtung (10) gemäß Anspruch 8 ferner umfassend eine Ausgangsschnittstelle (16), wobei das Kontrollmodul (12) ausgebildet ist, das Interferenz-Reduktions-Signal dem ersten Kommunikationsmodul (110) und/oder dem zweiten Kommunikationsmodul (120) über die Ausgangsschnittstelle (16) bereitzustellen,
oder wobei das Kontrollmodul (12) ausgebildet ist, um eine Signalverarbeitung eines Eingangssignals des ersten Kommunikationsmoduls (110) und/oder des zweiten Kommunikationsmoduls (120) basierend auf dem Interferenz-Reduktionssignal bereitzustellen.

11. Vorrichtung (10) gemäß einem der vorhergehenden Ansprüche, wobei das erste Kommunikationsmodul (110) ausgebildet ist, in einem Nahfunkmobilfunksystem zu kommunizieren und wobei das zweite Kommunikationsmodul (120) ausgebildet ist, in einem zellulären Mobilfunksystem zu kommunizieren.

12. Vorrichtung (10) gemäß einem der vorhergehenden Ansprüche, wobei das erste Kommunikationsmodul (110) ausgebildet ist, in einem Nahfunkmobilfunksystem gemäß IEEE 802.11 zu kommunizieren und wobei das zweite Kommunikationsmodul (120) ausgebildet ist, in einem Long Term Evolution- Mobilfunksystem, LTE, einem Universal Mobile Telecommunications System, UMTS, oder einem Mobilfunksystem der 5. Generation, 5G, zu kommunizieren.

13. Vorrichtung (10) gemäß einem der vorhergehenden Ansprüche, wobei das erste Mobilfunksystem ein Infrastruktur-basiertes Kommunikationssystem ist, und wobei das erste Kommunikationsmodul (110) ausgebildet ist, als Client in dem ersten Mobilfunksystem zu kommunizieren.

14. Verfahren für ein Sende-Empfangssystem (100) zur Kommunikation in zwei Mobilfunksystemen, das Verfahren umfassend
Kommunizieren (22) in einem ersten Mobilfunksystem;
Kommunizieren (24) in einem zweiten Mobilfunksystem; und
Anpassen (26) einer Sendeleistung, die in dem ersten Mobilfunksystem verwendet wird basierend auf einer Aktivität in dem zweiten Mobilfunksystem.

15. Programm mit einem Programmcode zum Durchführen des Verfahrens nach Anspruch 14 wenn der Programmcode auf einem Computer, einem Prozessor, einem Kontrollmodul oder einer programmierbaren Hardwarekomponente ausgeführt wird.

FIG. 1

FIG. 1a

FIG. 2

EP 3 163 952 A1

FIG. 3a

EP 3 163 952 A1

FIG. 3b

EP 3 163 952 A1

FIG. 3c

FIG. 3d

| | Duplex-Distance | 120 | MHz | Dargestellt ist eine Verteilung mit 10MHz breitem Carrier | | | | |
|---|---|---|---|---|---|---|---|---|
| | LTE-B7 TX Freq | 2505 | 2515 | 2525 | 2535 | 2545 | 2555 | 2565 |
| | LTE-B7 RX-Freq | 2625 | 2635 | 2645 | 2655 | 2665 | 2675 | 2685 |
| WlanCH | Wlan-Freq | IM3-Prod | | $2 \cdot F_{LTE} \ +/- \ F_{WLAN}$ | | | | |
| 1 | 2412 | 2598 | 2618 | 2638 | 2658 | 2678 | 2698 | 2718 |
| 2 | 2417 | 2593 | 2613 | 2633 | 2653 | 2673 | 2693 | 2713 |
| 3 | 2422 | 2588 | 2608 | 2628 | 2648 | 2668 | 2688 | 2708 |
| 4 | 2427 | 2583 | 2603 | 2623 | 2643 | 2663 | 2683 | 2703 |
| 5 | 2432 | 2578 | 2598 | 2618 | 2638 | 2658 | 2678 | 2698 |
| 6 | 2437 | 2573 | 2593 | 2613 | 2633 | 2653 | 2673 | 2693 |
| 7 | 2442 | 2568 | 2588 | 2608 | 2628 | 2648 | 2668 | 2688 |
| 8 | 2447 | 2563 | 2583 | 2603 | 2623 | 2643 | 2663 | 2683 |
| 9 | 2452 | 2558 | 2578 | 2598 | 2618 | 2638 | 2658 | 2678 |
| 10 | 2457 | 2553 | 2573 | 2593 | 2613 | 2633 | 2653 | 2673 |
| 11 | 2462 | 2548 | 2568 | 2588 | 2608 | 2628 | 2648 | 2668 |
| 12 | 2467 | 2543 | 2563 | 2583 | 2603 | 2623 | 2643 | 2663 |
| 13 | 2472 | 2538 | 2558 | 2578 | 2598 | 2618 | 2638 | 2658 |

4002

4004

4003

|IM3-LTE-RX| <5MHz — 4006

|IM3-LTE-RX| <10MHz — 4008

|IM3-LTE-RX| <20MHz — 4010

FIG. 4

22

24

Kommunizieren

Kommunizieren

Anpassen

26

FIG. 5

Europäisches
Patentamt

European
Patent Office

Office européen
des brevets

**EUROPÄISCHER RECHERCHENBERICHT**

Nummer der Anmeldung

EP 15 19 1411

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 8 611 888 B2 (IMMONEN ANTTI OSKARI [FI] ET AL) 17. Dezember 2013 (2013-12-17) * Spalte 1, Zeile 7 - Zeile 12 * * Spalte 1, Zeile 27 - Spalte 2, Zeile 10 * * Spalte 5, Zeile 7 - Zeile 10 * * Spalte 5, Zeile 15 - Zeile 40; Abbildung 1 * * Spalte 8, Zeile 1 - Zeile 8 * * Spalte 9, Zeile 14 - Zeile 23 * * Spalte 10, Zeile 57 - Spalte 11, Zeile 12 * * Spalte 15, Zeile 30 - Zeile 45 * ----- | 1-15 | INV. H04W52/24 |
| X A | US 2013/225095 A1 (HONG SEOK JIN [KR] ET AL) 29. August 2013 (2013-08-29) * Ansprüche 1,2 * * Absatz [0033] - Absatz [0036] * * Absatz [0040] - Absatz [0042] * ----- | 1-6,8, 11-15 7,9,10 | |
| X | DE 11 2014 000473 T5 (NTT DOCOMO INC [JP]; PANASONIC MOBILE COMM CO [JP]) 1. Oktober 2015 (2015-10-01) * Absatz [0001] * * Absatz [0009] - Absatz [0010] * * Absatz [0046] - Absatz [0047] * * Absatz [0057] - Absatz [0060] * * Absatz [0065] - Absatz [0070] * * Abbildungen 1,4 * ----- | 1-15 | RECHERCHIERTE SACHGEBIETE (IPC) H04W |

Der vorliegende Recherchenbericht wurde für alle Patentansprüche erstellt

| Recherchenort | Abschlußdatum der Recherche | Prüfer |
|---|---|---|
| Den Haag | 8. Januar 2016 | Riposati, Benedetto |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

..............................................................................

& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 19 1411

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-01-2016

| Im Recherchenbericht angeführtes Patentdokument | Datum der Veröffentlichung | Mitglied(er) der Patentfamilie | Datum der Veröffentlichung |
|---|---|---|---|
| US 8611888 B2 | 17-12-2013 | GB 2488201 A<br>US 2013196648 A1 | 22-08-2012<br>01-08-2013 |
| US 2013225095 A1 | 29-08-2013 | KR 20130099689 A<br>US 2013225095 A1 | 06-09-2013<br>29-08-2013 |
| DE 112014000473 T5 | 01-10-2015 | DE 112014000473 T5<br>US 2015334663 A1<br>WO 2014112380 A1 | 01-10-2015<br>19-11-2015<br>24-07-2014 |

EPO FORM P0461

Für nähere Einzelheiten zu diesem Anhang : siehe Amtsblatt des Europäischen Patentamts, Nr.12/82